# EUROPÄISCHE PATENTSCHRIFT

(11) **EP 1 724 487 B1**
(45) Veröffentlichungstag und Bekanntmachung des Hinweises auf die Patenterteilung: **12.08.2009**
(21) Anmeldenummer: 06008326.8
(22) Anmeldetag: 21.04.2006
(51) Int. Cl.: F16D 41/06

(54) **Freilauf**
Freewheel
Roue libre

(30) Priorität: 19.05.2005 DE 102005022906
(43) Veröffentlichungstag der Anmeldung: 22.11.2006
(73) Patentinhaber: LuK Lamellen und Kupplungsbau Beteiligungs KG, 77815 Bühl (DE)
(72) Erfinder: Jung, Stefan, 77694 Kehl (DE)

(56) Entgegenhaltungen:
- US-A- 2 323 353
- US-A- 3 017 976
- US-A1- 2004 020 738

## Beschreibung

Die Erfindung betrifft einen Freilauf zur richtungsabhängigen Drehmomentübertragung eines Leitrades in einem Drehmomentwandler, bestehend aus einem Leitrad und einer Freilaufeinheit, umfassend einen rotierenden Außenring, einen konzentrisch zum Außenring angeordneten rotierenden Innenring und mehrere zwischen Außenring und Innenring am Umfang von Laufbahnen angeordnete Übertragungselemente, mittels denen das Leitrad gegenüber dem Innenring in eine Drehmomentübertragungsposition oder eine Freilaufposition überführbar ist.

Freilaufanordnungen finden in den verschiedensten technischen Gebieten Anwendung. Allgemein bekannt sind Freiläufe, bei denen die Drehbewegung in einer Richtung durch Reibung kraftschlüssig übertragen wird und in der entgegengesetzten Richtung keine Bewegungsübertragung erfolgt. Der Freilauf stellt damit eine richtungsabhängig selbsttätig wirkende Kupplung dar. Bei Gleichlauf sind die beiden Kupplungsteile miteinander verbunden und es ist eine Drehmomentübertragung möglich. Bleibt das treibende Bauteil zurück, tritt Lösen, d.h. Freilaufen ein. Bei einem Drehmomentwandler muss ein Leitrad unter anderem zur Drehmomentübertragung die Funktion erfüllen, sich in einer Richtung zu drehen und in der anderen Richtung zu blockieren, zu sperren. Bei derartigen Drehmomentwandlern werden allgemein Rollen- oder Klemmkörperfreiläufe eingesetzt, indem in der Laufbahn zwischen einem Innenring und einem Außenring zylindrische Rollen angeordnet sind und die innere Laufbahnfläche des Außenrings Abschnitte aufweist, mit deren Oberfläche die Rollen in Eingriff gebracht werden oder die Laufbahnflächen des Innen- und Außenrings sind zylindrisch ausgebildet und zwischen dem Innen- und Außenring sind unrunde Klemmkörper vorgesehen, die bei Drehrichtungsumkehr unter Federkraft an der Laufbahnfläche anliegen. In der DE 690 21 769 T2 wird eine Freilaufkupplung vom Rollenlagertyp beschrieben, bei der das Innen- und Außenteil einander zugewandte gleiche oder unterschiedliche Formen von Laufbahnflächen aufweisen, wobei die Achsen der in der Laufbahn angeordneten Zwischenwälzkörper in einem vorgegebenen Winkel in Richtung auf einen Bereich geneigt sind, der die gemeinsame Achse der rotierenden Innen- und Außenteile enthält, so dass im Freilaufzustand der Kupplung die lichte Weite der Laufbahn durch die Bewegung der Zwischenwälzkörper gegen die verengende Wirkung der Krafteinheit vergrößert wird und bei Drehrichtungsumkehr die lichte Weite der Laufbahn unter der Wirkung der Krafteinheit verengt wird, so dass das Spiel unverzögert zu Null wird. Aus der DE 40 03 220 A1 ist eine Freilaufkupplung mit in einem Käfig geführten Klemmkörpern bekannt, die zwischen einem Außenring und einem Innenring angeordnet sind, wobei eine Umfangsfläche Klemmrampen aufweist, welche die Einstellung der Klemmkörper in zwei Kupplungseinrückstellungen für die beiden Drehrichtungen mittels einer Schalteinrichtung ermöglichen und aus der DE 40 32 330 A1 ist eine Freilaufkupplung bekannt, die zwei koaxial zueinander angeordnete Kraftübertragungselemente, insbesondere Antriebs- und Abtriebsräder aufweist, von denen das äußere mit einer Sternkörperfläche versehen ist, sowie Klemmkörper und einen mit dem äußeren Kraftübertragungselement begrenzt beweglich verbundenen und gegen die Drehbewegung des äußeren Kraftübertragungselementes mit Hilfe einer ortfesten Bremse verzögerbaren Steuerkäfig, zur bedarfsweisen Drehmomentübertragung. In der DE 35 01 610 C2 wird eine Freilaufkupplung mit Klemmkörpern als auch mit Rollkörpern beschrieben, bei der zur Übertragung eines Drehmomentes eine vorgegebene Beziehung zwischen dem Keilwinkel, der effektiven Höhe der Klemmklötze bzw. dem Abstand zwischen den Berührungspunkten jeder Klemmrolle mit dem Außen- und Innenring aufgezeigt wird. Neben den reibschlüssig arbeitenden Rollen- und Klemmkörperfreiläufen sind auch formschlüssig arbeitende Freiläufe bekannt. So wird in der DE 42 02 086 C1 eine Freilaufvorrichtung für allradgetriebene Kraftfahrzeuge beschrieben, bei der die beiden Freilaufteile über Sperrkörper zur Drehmomentübertragung verbunden sind, wobei die Schaltung über einen Schaltkäfig erfolgt und der Schaltkäfig mit dem einen Freilaufteil relativ verdrehbar und mit dem anderen Freilaufteil einander gegenüber zwischen zwei Endpositionen begrenzt verdrehbar ist und in der einen Endposition durch eine mit dem Schaltkäfig verbundene Feder in eine formschlüssige Verbindung zueinander und in der anderen Endposition kraftschlüssig in Axialrichtung gegeneinander abgestützt sind. Aus der DD 297 493 A5 ist weiterhin eine Freilaufkupplung bekannt, bei der ein Außenteil und ein Innenteil einander gegenüber durch Sperrklinken in eine Drehmomentübertragungsposition überführbar sind und die Sperrklinken über Steuerringe und eine daran angreifende Reibringanordnung synchron in die ein- oder auszurückende Position gegenüber dem Außenring überführt werden.

Aus US 2004/0020738, das als nächstliegender Stand der Technik gesehen wird, ist weiterhin ein gattungsgemäßer Freilauf für ein Leitrad eines Drehmomentwandlers bekannt.

Die bekannten Freiläufe, wie z. B. Rollen- oder Klemmkörperfreiläufe arbeiten nahezu spielfrei. Bei der Anwendung im Leitrad ist dies jedoch nicht zwingend erforderlich.

Aufgabe der vorliegenden Erfindung ist es, einen Freilauf für ein Leitrad in einem Drehmomentwandler zu schaffen, der in einfacher Weise in einer Richtung eine Drehbewegung des Leitrades ermöglicht und in der anderen Richtung die Drehbewegung des Leitrades sperrt, wobei der Freilauf aber beim Umschalten von der Position Freilaufen auf Sperren nicht spielfrei arbeitet und darüber hinaus die Herstellungskosten für den Freilauf sehr gering sind.

Gelöst wird die Aufgabe durch die Merkmale im Kennzeichen des Patentanspruchs 1, indem zwischen einem Leitrad und einem Innenring am Umfang von Laufbahnen als Sperrelemente ausgebildete Übertragungselemente angeordnet sind, die das Leitrad mit dem Innenring durch eine kraft- oder formschlüssige Verbindung mit den dafür ausgebildeten Flächenabschnitten der Laufbahnen zur Drehmomentübertragung in einer Richtung verbinden und in der entgegengesetzten Richtung eine Relativbewegung zwischen dem Leitrad und dem Innenring gestatten.

Vorteilhaft ist, dass die Sperrelemente als drehbar gelagerte Sperrelemente am Umfang der Laufbahnen ausgebildet sind, wobei die Sperrelemente formschlüssig mit ihren nach außen zeigenden Enden an einer Wandung von im Leitrad angeordneten Nuten und mit ihren nach innen zeigenden Enden an einer Wandung von im Innenring angeordneten Nuten anliegend bei einer Drehung des Leitrades entgegen dem Uhrzeigersinn die Drehbewegung blockieren, wobei bei einem Richtungswechsel der Drehung des Leitrades in Freilaufrichtung die Sperrelemente soweit verkippen, bis die Sperrelemente an Anlageflächen in Ausnehmungen im Außenring anliegen und wobei in dieser Endposition der Sperrelemente eine Drehung des Leitrades und des Außenrings gegenüber dem Innenring erfolgt.

Eine vorteilhafte Ausführungsform wird darin gesehen, dass die Sperrelemente als flache insbesondere knochenartig ausgebildete und am Umfang der Laufbahnen des Freilaufs angeordnete Formelemente vorgesehen sind.

Bevorzugt ist vorgesehen, dass die Sperrelemente in Ausnehmungen des Außenrings gelagert sind, wobei die Anlageflächen der Ausnehmungen des Außenrings insbesondere als Schrägen ausgebildet sind.

Eine vorteilhafte Weiterbildung wird darin gesehen, dass zwischen Innenring, Außenring und Leitrad unterschiedliche Passungen vorgesehen sind, so dass sich der Außenring beim Richtungswechsel etwas langsamer dreht als das Leitrad, wobei insbesondere zwischen Innenring und Außenring eine Spielpassung und insbesondere zwischen Außenring und Leitrad eine Übergangspassung vorgesehen ist.

Wesentlich ist an dem neuen Freilauf, dass der Freilauf gegenüber den bekannten Freiläufen, wie z. B. Rollen- oder Klemmkörperfreiläufen, die nahezu spielfrei arbeiten, beim Umschalten von Freilaufen auf Sperren nicht spielfrei arbeitet, da dies für die Anwendung im Leitrad nicht zwingend erforderlich ist. Weiterhin sind die Herstellungskosten des erfindungsgemäßen Freilaufes geringer als bei bisher eingesetzten Freiläufen.

Vorteilhaft ist weiterhin vorgesehen, dass die Wandungen der Nuten im Innenring und die Wandungen der Nuten im Leitrad senkrecht zur Drehachse des Freilaufes angeordnet sind, wobei die Nuten im Innenring und die Nuten im Leitrad insbesondere mit schrägen Wandungen ausgebildet sind.

In Variation kann auch vorgesehen sein, dass die Sperrelemente am Leitrad gelagert und geführt sind, wobei Federn vorgesehen sind, die die Sperrelemente beim Richtungswechsel in die im Innenring angeordneten Nuten drücken und damit die Bewegung zwischen Leitrad und Innenring verhindern. Der Vorteil dieser Ausführungsform des Freilaufs besteht darin, dass man keinen Außenring benötigt. Zwar werden für diese Variante Federn benötigt, jedoch liegen die Herstellungskosten der Federn deutlich unter denen des Außenrings ohne Federn.

Eine vorteilhafte Variante wird darin gesehen, dass die Übertragungselemente als Rollen ausgebildet sind, wobei die Rollen am Umfang der Laufbahnen angeordnet sind und bei einer Derhung des Leitrades entgegen dem Uhrzeigersinn die Drehbewegung blockieren, indem die Rollen kraftschlüssig gegen geneigte Rampen des Außenrings gedrückt werden, wobei bei einem Richtungswechsel der Drehung des Leitrades in Freilaufrichtung die Rollen sich aus der Klemmposition der geneigten Rampen lösen, und wobei in einer Endposition eine Drehung des Leitrades gegenüber dem Innenring erfolgt.

Bevorzugt ist vorgesehen, dass zwischen den Rollen Abstandsstücke zur Festlegung der in Eingriff zu bringenden Rollen vorgesehen sind.

In Variation kann auch vorgesehen sein, dass die Rollen in einem einteiligen Ring angeordnet sind.

Die Erfindung wird folgend anhand von schematisch in Zeichnungen dargestellten Ausführungsbeispielen näher erläutert.

Es zeigen:
Fig.1 ein erstes Ausführungsbeispiel des erfindungsgemäßen Freilaufes in Vorderansicht;
Fig. 2 eine Detailansicht des ersten Ausführungsbeispiels;
Fig. 3 ein zweites Ausführungsbeispiel des erfindungsgemäßen Freilaufes in Vorderansicht;
Fig. 4 eine Detailansicht des zweiten Ausführungsbeispiels;
Fig. 5 eine weiteres Ausführungsbeispiel eines Freilaufs in Detailansicht.

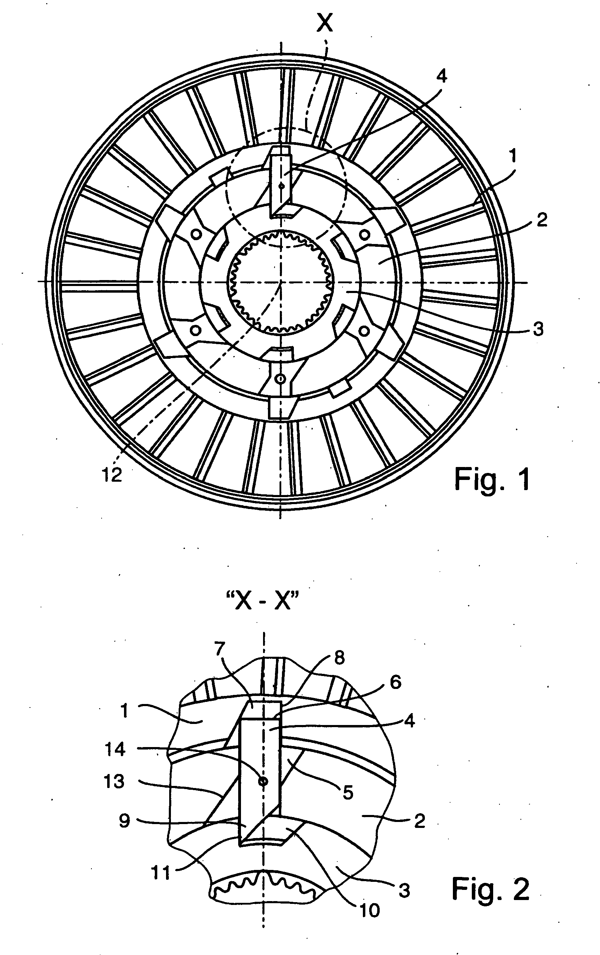

Das in Figur 1 dargestellte erste Ausführungsbeispiel eines Freilaufes besteht aus einem Leitrad 1, einem rotierenden Außenring 2, einem konzentrisch zum Außenring 2 angeordneten rotierenden Innenring 3 und mehreren einzelnen zwischen dem Außenring 2 und dem Innenring 3 als Sperrelemente 4 ausgebildete, am Umfang von Laufbahnen angeordneten Übertragungselementen. Die Sperrelemente 4 sind als flache, insbesondere knochenförmig ausgebildete Formelemente vorgesehen. Die einzelnen Sperrelemente 4 sind drehbar in vorgesehenen Ausnehmungen 5 des Außenrings 2 gelagert. Bei einer Drehung des Leitrades 1 nach links entgegen dem Uhrzeigersinn gemäß Figur 2 blockieren die Sperrelemente 4 die Drehbewegung, da die Sperrelemente 4 mit ihren nach außen zeigenden Enden 6 an Wandungen 8 von im Leitrad 1 angeordneten Nuten 7 und mit ihren nach innen zeigenden Enden 9 an Wandungen 11 von im Innenring 3 angeordneten Nuten 10 anliegen. Da die Wandungen 8 der im Leitrad 1 angeordneten Nuten 7 und die Wandungen 11 der im Innenring 3 angeordneten Nuten 10 senkrecht zu einer Drehachse 12 des Freilaufs angeordnet sind, verhindern die im Außenring 2 gelagerten Sperrelemente 4 eine Drehbewegung zwischen Leitrad 1 und Innenring 3. Der Innenring steht im Betriebszustand.

Dreht man das Leitrad 1 nach rechts in Freilaufrichtung, verkippen die im Außenring 2 gelagerten Sperrelemente 4 über Lagerpunkte 14 innerhalb der Ausnehmungen 5 und drehen sich nach rechts im Uhrzeigersinn. Der Außenring 2 dreht sich dabei ebenfalls nach rechts bis sich die Sperrelemente 4 an als Schrägen 13 ausgebildeten Anlageflächen der Ausnehmungen 5 des Außenringes 2 anlegen. Unterstützt wird dieser Vorgang durch die Fliehkraft, die die Sperrelemente 4 um die Lagerpunkte 14 dreht und an die entsprechenden Schrägen 13 der Ausnehmungen 5 des Außenrings 2 drückt. Die Position der Lagerpunkte 14 an den Sperrelementen 4 muss so ausgelegt werden, dass die Sperrelemente 4 kippen und sich an die jeweiligen Schrägen 13 der Ausnehmungen 5 am Außenring 2 anlegen. Befinden sich die Sperrelemente 4 in der nicht näher dargestellten Endposition, drehen sich das Leitrad 1, die Sperrelemente 4 und der Außenring 2 um den Innring 3. Die nach innen zeigenden Enden 9 der Sperrelemente 4 greifen in dieser Stellung nicht in die im Innenring 3 angeordneten Nuten 10 ein. Erfolgt nun ein Richtungswechsel nach links entgegen dem Uhrzeigersinn, drückt das Leitrad 1 gegen die Sperrelemente 4 und dreht diese über die Lagerpunkte 14 nach links. Bei einem Richtungswechsel von Freilaufen auf Klemmen ist es wichtig, dass sich der Außenring 2 etwas langsamer dreht als das Leitrad 1. Dies kann durch unterschiedliche Passungen zwischen Innenring 3 und Außenring 2 und Leitrad 1 erzielt werden, z.B. ist zwischen Innenring 3 und Außenring 2 eine Spielpassung und zwischen Außenring 2 und Leitrad 1 eine Übergangspassung vorgesehen. Bedingt durch diese Passungsauswahl bleibt der Außenring 2 zunächst stehen. Das Leitrad 1 dreht sich zuerst. Die Sperrelemente 4 kippen somit durch die Anlage ihrer nach außen zeigenden Enden 6 an den Wandungen 8 der im Leitrad 1 angeordneten Nuten 7 über die Lagerpunkte 14 und drehen sich in die Position Klemmen/ Blockieren zurück (siehe Figur 2).

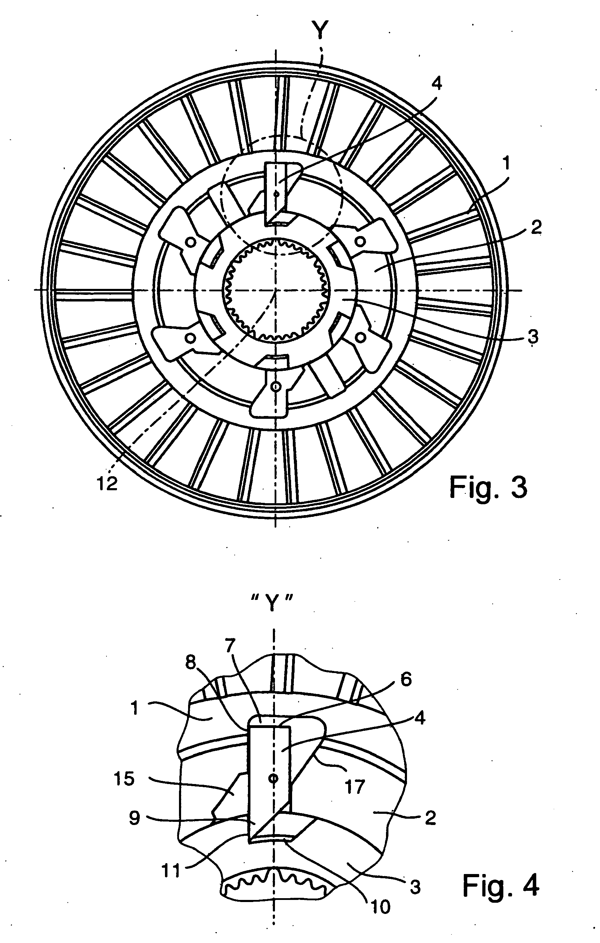

In der Ausführungsform entsprechend Figur 3 besteht der Freilauf aus dem Leitrad 1, dem Innenring 3, den Sperrelementen 4 und Federn 15. Bei dieser Ausführungsform werden die Sperrelemente 4 im Leitrad 1 gelagert und geführt. Versucht man das Leitrad 1 nach links entgegen dem Uhrzeigersinn zu drehen, blockieren die Sperrelemente 4 die Bewegung zwischen Leitrad 1 und Innenring 3 und verhindern damit eine Drehbewegung, indem die Sperrelemente 4 mit ihren nach innen zeigenden Enden 9 an Wandungen 11 der im Innenring 3 angeordneten Nuten 10 anliegen. Wenn man das Leitrad 1 nach rechts im Uhrzeigersinn dreht, kippen dann die Sperrelemente 4, wenn sie gegen schrägen Wandungen 16 der im Innenring 3 angeordneten Nuten 10 stoßen. Durch die Fliehkraft werden die Sperrelemente 4 in Position Freilaufen soweit gedreht, bis sich die Sperrelemente 4 mit ihren nach außen zeigenden Enden 6 an schrägen Wandungen 17 der im Leitrad 1 angeordneten Nuten 7 anlegen. Die nach innen zeigenden Enden 9 der Sperrelemente 4 greifen in dieser Stellung nicht in die im Innenring 3 angeordneten Nuten 10 ein. Die Federn 15 versuchen die Sperrelemente 4 nach links entgegen dem Uhrzeigersinn zu drehen. Bei einem Richtungswechsel von Freilaufen auf Klemmen/ Blockieren drücken die Federn 15 die Sperrelemente 4 in die im Innenring 3 angeordneten Nuten 10. Die Sperrelemente 4 erreichen dann die Position Klemmen entsprechend Figur 4. Ein Vorteil dieses Ausführungsbeispiels besteht darin, dass man keinen Außenring benötigt. Zwar werden für diese Variante Federn 15 benötigt, jedoch liegen die Herstellungskosten der Federn deutlich unter denen des Außenrings 2 aus dem ersten Ausführungsbeispiel.

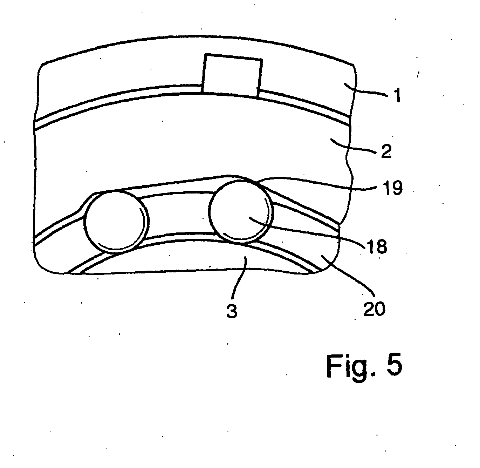

Eine weitere Ausführungsform eines Freilaufs gemäß Figur 5 besteht darin, dass zwischen dem Außenring 2 und dem Innenring 3 Sperrelemente 4 angeordnet sind, die sich bei entsprechender Drehrichtung der beiden Ringe an Rampen 19 verkeilen. In einer weiteren Ausführung sind diese Rampen 19 in dem Außenring 2 angebracht. Diese Rampen 19 können aber auch ― entgegen der Darstellung in der Figur - in dem Innenring 3 angebracht sein. Wichtig ist im Rahmen der Erfindung, dass das mindestens eine Sperrelement 4 ebenfalls Rampen 19 aufweist, die den Rampen 19 des Nachbarringes zugewandt sind. Die Fig. 5 ist bezüglich des Sperrelementes etwas irreführend, denn die Rollen 18 und die Abstandsstücke 20 sind nicht einzelne Bauteile, sondern sie sind einstückig. Durch diese Ausgestaltung gleiten die Rollen 18 (die wie bereits gesagt gar nicht rollen) auf der Oberfläche des Innenringes 3. Gleichzeitig stellen die "Rollen" mit ihrer Außenrundung, die dem Innendurchmesser des Außenringes zugewandt ist, Rampen dar, die sich mit den Rampen 19 des Außenringes 2 verkeilen können.

### Bezugszeichenliste

- 1: Leitrad
- 2: Außenring
- 3: Innenring
- 4: Sperrelement
- 5: Ausnehmung im Außenring
- 6: nach außen zeigendes Ende des Sperrelementes
- 7: Nut im Leitrad
- 8: Wandung der Nut im Leitrad
- 9: nach innen zeigendes Ende des Sperrelementes
- 10: Nut im Innenring
- 11: Wandung der Nut im Innenring
- 12: Drehachse
- 13: Schräge der Ausnehmung des Außenringes
- 14: Lagerpunkt des Sperrelementes
- 15: Feder
- 16: schräge Wandung der Nut im Innenring
- 17: schräge Wandung der Nut im Leitrad
- 18: Rollen
- 19: geneigte Rampe
- 20: Abstandsstück

## Patentansprüche

1. Freilauf für ein Leitrad eines Drehmomentwandlers mit einer Nabe - die drehfest auf einer Hohlwelle angeordnet ist - und einem Außenring, der beispielsweise mittels einer Pressverbindung mit dem Leitrad drehfest verbunden ist, wobei Sperrelemente (4) zwischen dem Außendurchmesser der Nabe und dem Innendurchmesser des Außenringes angeordnet sind und einen Drehwinkel benötigen um die Sperrung aufzubauen, **dadurch gekennzeichnet, dass** mindestens ein Sperrelement (4) beim Drehen in die Sperrposition in Nute (7, 10) eingreift.

2. Freilauf nach Anspruch 1, **dadurch gekennzeichnet, dass** mindestens ein drehbar gelagertes Sperrelement (4) vor der Sperrwirkung eine Drehung um eine Achse ausübt, die parallel zur Drehachse des Leitrades (1) ist.

3. Freilauf nach Anspruch 1 oder 2, **dadurch gekennzeichnet, dass** mehrere, als flache Formelemente ausgebildete Sperrelemente (4) am Umfang des Freilaufs vorgesehen sind.

4. Freilauf nach Anspruch 1 bis 3, **dadurch gekennzeichnet, dass** das Sperrelement (4) in einer Ausnehmung (5) des Außenrings (2) gelagert ist.

5. Freilauf nach einem der Ansprüche 1 bis 4, **dadurch gekennzeichnet, dass** die Anlagefläche (13) der Ausnehmung (5) im Außenring (2) als Schräge ausgebildet ist.

6. Freilauf nach einem der Ansprüche 1 bis 5, **dadurch gekennzeichnet, dass** zwischen Innenring (3), Außenring (2) und Leitrad (1) unterschiedliche Passungen so vorgesehen sind, so dass sich der Außenring (2) beim Richtungswechsel etwas langsamer dreht, als das Leitrad (1).

7. Freilauf nach einem der Ansprüche 1 bis 6, **dadurch gekennzeichnet, dass** insbesondere zwischen dem Innenring (3) und dem Außenring (2) eine Spielpassung vorgesehen ist.

8. Freilauf nach einem der Ansprüche 1 bis 7, **dadurch gekennzeichnet, dass** insbesondere zwischen dem Außenring (2) und dem Leitrad (1) eine Übergangspassung vorgesehen ist.

9. Freilauf nach einem der Ansprüche 1 bis 8, **dadurch gekennzeichnet, dass** die Wandung (11) der Nut (10) im Innenring (3) und die Wandung (8) der Nut (7) im Leitrad (1) senkrecht zu einer Drehachse (12) des Freilaufes angeordnet sind.

10. Freilauf nach einem der Ansprüche 1 bis 9, **dadurch gekennzeichnet, dass** bei einem Richtungswechsel der Drehung des Leitrades (1) in Freilaufrichtung das Sperrelement (4) in der Ausnehmung (5) des Außenrings (2) soweit kippt, bis es an der Schräge (13) der Ausnehmung (5) des Außenrings (2) anliegt und das Sperrelement (4) mit dem nach innen zeigende Ende (9) nicht mehr in die im Innenring (3) angeordnete Nut (10) eingreift.

11. Freilauf nach einem der Ansprüche 1 bis 10, **dadurch gekennzeichnet, dass** das mindestens eine Sperrelement (4) am Leitrad (1) gelagert und geführt ist, und mittels einer Feder (15) derart beaufschlagt ist, dass die Sperrfunktion unterstützt wird.

12. Freilauf nach einem der Ansprüche 1 bis 11, **dadurch gekennzeichnet, dass** die Nut (10) im Innenring (3) und die Nut (7) im Leitrad (1) mit schrägen Wandungen (16,17) ausgebildet sind.

13. Freilauf nach Anspruch 1, **dadurch gekennzeichnet, dass** nur ein Sperrelement (4) vorhanden ist, welches vor der Sperrwirkung eine Drehung um eine Achse ausübt, die identisch mit der Drehachse des Leitrades (1) ist, wobei bei der Sperrung Rampen des Sperrelementes (4) sich mit Rampen (19) des Außenringes (2) verkeilen.

## Claims

1. Freewheel for a guide wheel of a torque converter with a hub, which is arranged fixedly to the rotation of a hollow shaft, and with an outer ring which is connected fixedly to the rotation of the guide wheel, for example by means of a press connection, blocking elements (4) being arranged between the outside diameter of the hub and the inside diameter of the outer ring and requiring an angle of rotation in order to build up the blocking, **characterized in that** at least one blocking element (4) engages into slots (7, 10) during rotation into the blocking position.

2. Freewheel according to Claim 1, **characterized in that** at least one rotatably mounted blocking element (4) performs, before the blocking action, a rotation about an axis which is parallel to the axis of rotation of the guide wheel (1).

3. Freewheel according to Claim 1 or 2, **characterized in that** a plurality of blocking elements (4) designed as flat formed elements are provided on the circumference of the freewheel.

4. Freewheel according to Claims 1 to 3,
**characterized in that** the blocking element (4) is mounted in a recess (5) of the outer ring (2).

5. Freewheel according to one of Claims 1 to 4,
**characterized in that** the bearing face (13) of the recess (5) in the outer ring (2) is designed as a slope.

6. Freewheel according to one of Claims 1 to 5, **characterized in that** different fits are provided between the inner ring (3), outer ring (2) and guide wheel (1) such that, during a change in direction, the outer ring (2) rotates somewhat more slowly than the guide wheel (1).

7. Freewheel according to one of Claims 1 to 6,
**characterized in that** a clearance fit is provided particularly between the inner ring (3) and the outer ring (2).

8. Freewheel according to one of Claims 1 to 7,
**characterized in that** a transition fit is provided particularly between the outer ring (2) and the guide wheel (1).

9. Freewheel according to one of Claims 1 to 8,
**characterized in that** the wall (11) of the slot (10) in the inner ring (3) and the wall (8) of the slot (7) in the guide wheel (1) are arranged perpendicularly to an axis of rotation (12) of the freewheel.

10. Freewheel according to one of Claims 1 to 9,
**characterized in that,** during a change in direction of the rotation of the guide wheel (1) in the freewheel direction, the blocking element (4) in the recess (5) of the outer ring (2) tilts until it bears against the slope (13) of the recess (5) of the outer ring (2), and the blocking element (4) no longer engages with the inwardly pointing end (9) into the slot (10) arranged in the inner ring (3).

11. Freewheel according to one of Claims 1 to 10, **characterized in that** the at least one blocking element (4) is mounted and guided on the guide wheel (1) and is loaded by means of a spring (15) in such a way that the blocking function is assisted.

12. Freewheel according to one of Claims 1 to 11, **characterized in that** the slot (10) in the inner ring (3) and the slot (7) in the guide wheel (1) are designed with oblique walls (16, 17).

13. Freewheel according to Claim 1, **characterized in that** only one blocking element (4) is present, which, before the blocking action, performs a rotation about an axis which is identical to the axis of rotation of the guide wheel (1), ramps of the blocking element (4) being keyed with ramps (19) of the outer ring (2) during blocking.

## Revendications

1. Roue libre pour une roue directrice d'un convertisseur de couple comprenant un moyeu qui est disposé de manière solidaire en rotation sur un arbre creux et une bague extérieure qui est par exemple connectée au moyen d'une connexion par ajustement serré de manière solidaire en rotation à la roue directrice, des éléments de blocage (4) étant disposés entre le diamètre extérieur du moyeu et le diamètre intérieur de la bague extérieure, et nécessitant un angle de rotation pour accroître le blocage, **caractérisée en ce qu'**au moins un élément de blocage (4), lors de la rotation dans la position de blocage, vient en prise dans des rainures (7, 10).

2. Roue libre selon la revendication 1, **caractérisée en ce qu'**au moins un élément de blocage (4) monté de manière rotative effectue avant l'effet de blocage une rotation autour d'un axe qui est parallèle à l'axe de rotation de la roue directrice (1).

3. Roue libre selon la revendication 1 ou 2,
**caractérisée en ce que** plusieurs éléments de blocage (4) réalisés sous forme d'éléments moulés plats sont disposés sur la périphérie de la roue libre.

4. Roue libre selon l'une quelconque des revendications 1 à 3, **caractérisée en ce que** l'élément de blocage (4) est monté dans un évidement (5) de la bague extérieure (2).

5. Roue libre selon l'une quelconque des revendications 1 à 4, **caractérisée en ce que** la surface d'appui (13) de l'évidement (5) est réalisée sous forme de biseau dans la bague extérieure (2).

6. Roue libre selon l'une quelconque des revendications 1 à 5, **caractérisée en ce que** l'on prévoit entre la bague intérieure (3), la bague extérieure (2) et la roue directrice (1) différents ajustements de telle sorte que la bague extérieure (2), lors d'un changement de sens, tourne un peu plus lentement que la roue directrice (1).

7. Roue libre selon l'une quelconque des revendications 1 à 6, **caractérisée en ce que,** notamment entre la bague intérieure (3) et la bague extérieure (2), on prévoit un ajustement avec jeu.

8. Roue libre selon l'une quelconque des revendications 1 à 7, **caractérisée en ce que** notamment entre la bague extérieure (2) et la roue directrice (1), on prévoit un ajustement de transition.

9. Roue libre selon l'une quelconque des revendications 1 à 8, **caractérisée en ce que** la paroi (11) de la rainure (10) dans la bague intérieure (3) et la paroi (8) de la rainure (7) dans la roue directrice (1) sont disposées perpendiculairement à un axe de rotation (12) de la roue libre.

10. Roue libre selon l'une quelconque des revendications 1 à 9, **caractérisée en ce que** dans le cas d'un changement de sens de la rotation de la roue directrice (1) dans le sens de la roue libre, l'élément de blocage (4) dans l'évidement (5) de la bague extérieure (2) bascule jusqu'à ce qu'il vienne s'appliquer contre le biseau (13) de l'évidement (5) de la bague extérieure (2) et que l'élément de blocage (4) avec l'extrémité (9) tournée vers l'intérieur ne vienne plus en prise dans la rainure (10) disposée dans la bague intérieure (3).

11. Roue libre selon l'une quelconque des revendications 1 à 10, **caractérisée en ce qu'**au moins un élément de blocage (4) est monté et guidé sur la roue directrice (1), et est sollicité au moyen d'un ressort (15) de telle sorte que la fonction de blocage soit favorisée.

12. Roue libre selon l'une quelconque des revendications 1 à 11, **caractérisée en ce que** la rainure (10) dans la bague intérieure (3) et la rainure (7) dans la roue directrice (1) sont réalisées avec des parois obliques (16, 17).

13. Roue libre selon la revendication 1, **caractérisée en ce que** seulement un élément de blocage (4) est prévu, lequel effectue avant l'effet de blocage une rotation autour d'un axe, qui est identique à l'axe de rotation de la roue directrice (1), des rampes de l'élément de blocage (4) se coinçant lors du blocage avec des rampes (19) de la bague extérieure (2).
